# EUROPEAN PATENT APPLICATION

(11) **EP 1 383 043 A1**
(43) Date of publication of application: **21.01.2004**
(21) Application number: 02002447.7
(22) Date of filing: 01.02.2002
(51) Int. Cl.: G06F 9/44

(54) **Organizing objects in hierarchy with automatic versioning**

(71) Applicant: SAP Aktiengesellschaft, 69190 Walldorf (DE)
(72) Inventor: Theilmann, Wolfgang, 76137 Karlsruhe (DE)

(57) **Abstract**

Computer objects (331, 332) are organized in hierarchy with automatic versioning by receiving a name identifier (230) for an object (331) by interaction with an author; creating a name directory (310) with the name identifier (230); creating a first version directory (321) subordinated to the name directory (310), the first version directory (321) having a first countable identifier (271); upon receiving a versioning command, creating a second version directory (322) subordinated to the name directory (310), the second version directory (322) having a second countable identifier (272) derived from the first countable identifier (271); and copying the content (331/332) of the first version directory (321) into the second version directory (322).

## Description

### Field of the Invention

The present invention generally relates to data processing and, more particularly, relates to method, program and system for versioning objects that are stored in a directory structure.

### Background of the Invention

In computer systems, data objects such as text or pictures are often organized by one or more authors who create and modify them. The objects often interact with each other, for example, by calling through hyperlinks.

The human authors sometimes like to modify the objects. To avoid inter-object conflicts, authors need to organize the objects in versions. Versioning is challenging, especially for authors that focus on the objects rather than on technical details of their computers. Also, versioning tools should not interfere with the authoring tools.

There is a technical task to hide the complexity from the author and to automate versioning.

### Summary

The task of the invention is solved by computer method, program product and system according to the independent claims. Advantageous embodiments are subject to the dependent claims.

According to the present invention, a computer program product supports an author to organize objects by automatically creating a directory with an object identifier and countable subdirectories.

More in detail, a method for organizing objects in hierarchy with automatic versioning comprises: receiving a name identifier for an object by interaction with an author; creating a name directory with the name identifier; creating a first version directory subordinated to the name directory, the first version directory having a first countable identifier; upon receiving a versioning command, creating a second version directory subordinated to the name directory, the second version directory having a second countable identifier derived from the first countable identifier; and copying the content of the first version directory into the second version directory.

Preferably, receiving comprises to present an input mask to the author. Preferably, receiving comprises to present a further input mask for selecting an object type, and wherein creating the first version directory comprises to create an object of the selected object type. Preferably, the name directory is created as a shared directory for multiple authors. Preferably, receiving the versioning command comprises to determine the current version. Preferably, the second countable identifier is derived from the first countable identifier by up-counting.

Further provided are a computer program product ("versioning program") with a plurality of instructions for controlling a computer to execute the method steps, and a computer system to implement the method steps.

It is an advantage that authors can explicitly address the versions and can simultaneously use multiple versions.

### Brief Description of the Drawings

- FIG. 1: illustrates a simplified diagram of a computer system;
- FIG. 2: illustrates a simplified flow chart of a method according to the present invention;
- FIG. 3: illustrates a screen presentation with an input mask to receive an object name;
- FIG. 4: illustrates a directory hierarchy with root directory, name directory, version directory, and object;
- FIG. 5: illustrates an exemplary object in a first version, FIG. 5A on a screen as presented to an author, and FIG. 5B in a markup language file;
- FIG. 6: illustrates a screen presentation with an input mask for receiving a versioning command;
- FIG. 7: illustrates an updated directory hierarchy with root directory, name directory, first and second version directories, object and object copy; and
- FIG. 8: illustrates the exemplary object of FIG. 5 in a second version, FIG. 8A on the screen as presented to the author, and FIG. 8B in a further markup language file.

### Computer System in General

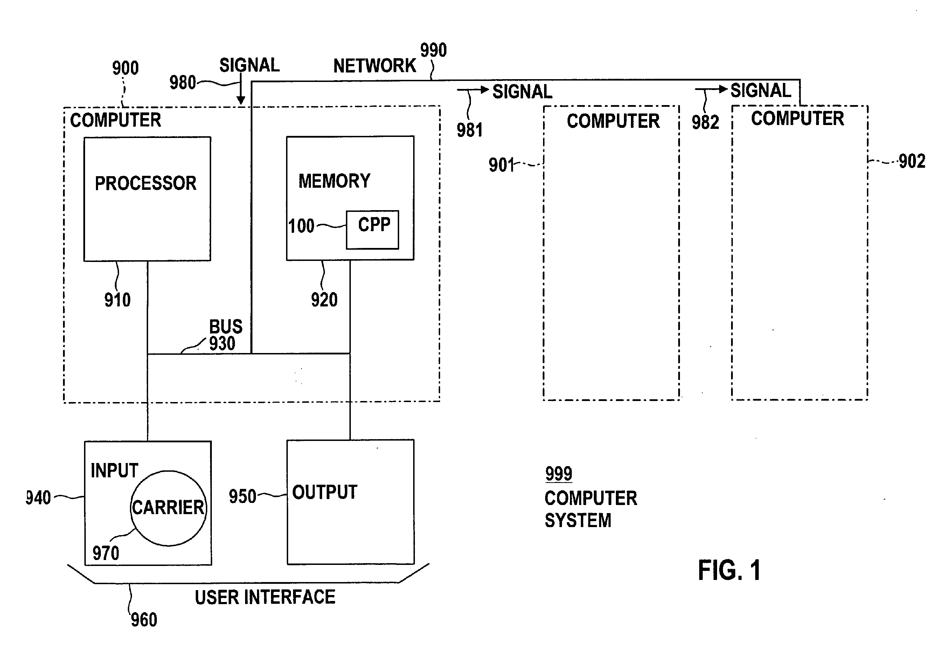

FIG. 1 illustrates a simplified block diagram of the inventive computer network system 999 having a plurality of computers 900, 901, 902 (or 90q, with q=0...Q-1, Q any number).

Computers 900-902 are coupled via inter-computer network 990. Computer 900 comprises processor 910, memory 920, bus 930, and, optionally, input device 940 and output device 950 (I/O devices, user interface 960). As illustrated, the invention is present by computer program product 100 (CPP), program carrier 970 and program signal 980, collectively "program".

In respect to computer 900, computer 901/902 is sometimes referred to as "remote computer", computer 901/902 is, for example, a server, a router, a peer device or other common network node, and typically comprises many or all of the elements described relative to computer 900. Hence, elements 100 and 910-980 in computer 900 collectively illustrate also corresponding elements 10q and 91q-98q (shown for q=0) in computers 90q.

Computer 900 is, for example, a conventional personal computer (PC), a desktop and hand-held device, a multiprocessor computer, a pen computer, a microprocessor-based or programmable consumer electronics, a minicomputer, a mainframe computer, a personal mobile computing device, a mobile phone, a portable or stationary personal computer, a palmtop computer or the like.

Processor 910 is, for example, a central processing unit (CPU), a micro-controller unit (MCU), digital signal processor (DSP), or the like.

Memory 920 symbolizes elements that temporarily or permanently store data and instructions. Although memory 920 is conveniently illustrated as part of computer 900, memory function can also be implemented in network 990, in computers 901/902 and in processor 910 itself (e.g., cache, register), or elsewhere. Memory 920 can be a read only memory (ROM), a random access memory (RAM), or a memory with other access options. Memory 920 is physically implemented by computer-readable media, such as, for example: (a) magnetic media, like a hard disk, a floppy disk, or other magnetic disk, a tape, a cassette tape; (b) optical media, like optical disk (CD-ROM, digital versatile disk - DVD); (c) semiconductor media, like DRAM, SRAM, EPROM, EEPROM, memory stick, or by any other media, like paper.

Optionally, memory 920 is distributed across different media. Portions of memory 920 can be removable or non-removable. For reading from media and for writing in media, computer 900 uses devices well known in the art such as, for example, disk drives, tape drives.

Memory 920 stores support modules such as, for example, a basic input output system (BIOS), an operating system (OS), a program library, a compiler, an interpreter, and a text-processing tool. Support modules are commercially available and can be installed on computer 900 by those of skill in the art. For simplicity, these modules are not illustrated.

CPP 100 comprises program instructions and - optionally - data that cause processor 910 to execute method steps of the present invention. Method steps are explained with more detail below. In other words, CPP 100 defines the operation of computer 900 and its interaction in network system 999. For example and without the intention to be limiting, CPP 100 can be available as source code in any programming language, and as object code ("binary code") in a compiled form. Persons of skill in the art can use CPP 100 in connection with any of the above support modules (e.g., compiler, interpreter, operating system).

Although CPP 100 is illustrated as being stored in memory 920, CPP 100 can be located elsewhere. CPP 100 can also be embodied in carrier 970.

Carrier 970 is illustrated outside computer 900. For communicating CPP 100 to computer 900, carrier 970 is conveniently inserted into input device 940. Carrier 970 is implemented as any computer readable medium, such as a medium largely explained above (cf. memory 920). Generally, carrier 970 is an article of manufacture comprising a computer readable medium having computer readable program code means embodied therein for executing the method of the present invention. Further, program signal 980 can also embody computer program 100. Signal 980 travels on network 990 to computer 900.

Having described CPP 100, program carrier 970, and program signal 980 in connection with computer 900 is convenient. Optionally, program carrier 971/972 (not shown) and program signal 981/982 embody computer program product (CPP) 101/102 to be executed by processor 911/912 (not shown) in computers 901/902, respectively.

Input device 940 symbolizes a device that provides data and instructions for processing by computer 900. For example, device 940 is a keyboard, a pointing device (e.g., mouse, trackball, cursor direction keys), microphone, joystick, game pad, scanner, disk drive. Although the examples are devices with human interaction, device 940 can also operate without human interaction, such as, a wireless receiver (e.g., with satellite dish or terrestrial antenna), a sensor (e.g., a thermometer), a counter (e.g., goods counter in a factory). Input device 940 can serve to read carrier 970.

Output device 950 symbolizes a device that presents instructions and data that have been processed. For example, a monitor or a display, (cathode ray tube (CRT), flat panel display, liquid crystal display (LCD), speaker, printer, plotter, vibration alert device. Similar as above, output device 950 communicates with the user, but it can also communicate with further computers.

Input device 940 and output device 950 can be combined to a single device; any device 940 and 950 can be provided optional.

Bus 930 and network 990 provide logical and physical connections by conveying instruction and data signals. While connections inside computer 900 are conveniently referred to as "bus 930", connections between computers 900-902 are referred to as "network 990". Optionally, network 990 comprises gateways being computers that specialize in data transmission and protocol conversion.

Devices 940 and 950 are coupled to computer 900 by bus 930 (as illustrated) or by network 990 (optional). While the signals inside computer 900 are mostly electrical signals, the signals in network are electrical, magnetic, optical or wireless (radio) signals.

Networking environments (as network 990) are commonplace in offices, enterprise-wide computer networks, intranets and the internet (i.e. world wide web). The physical distance between a remote computer and computer 900 is not important. Network 990 can be a wired or a wireless network. To name a few network implementations, network 990 is, for example, a local area network (LAN), a wide area network (WAN), a public switched telephone network (PSTN); a Integrated Services Digital Network (ISDN), an infra-red (IR) link, a radio link, like Universal Mobile Telecommunications System (UMTS), Global System for Mobile Communication (GSM), Code Division Multiple Access (CDMA), or satellite link.

Transmission protocols and data formats are known, for example, as transmission control protocol/internet protocol (TCP/IP), hyper text transfer protocol (HTTP), secure HTTP, wireless application protocol, unique resource locator (URL), a unique resource identifier (URI), hyper text markup language HTML, extensible markup language (XML), extensible hyper text markup language (XHTML), wireless application markup language (WML), Standard Generalized Markup Language (SGML) etc.

Interfaces coupled between the elements are also well known in the art. For simplicity, interfaces are not illustrated. An interface can be, for example, a serial port interface, a parallel port interface, a game port, a universal serial bus (USB) interface, an internal or external modem, a video adapter, or a sound card. Computer and program are closely related. As used hereinafter, phrases, such as "the computer provides" and "the program provides", are convenient abbreviation to express actions by a computer that is controlled by a program.

### Detailed Description

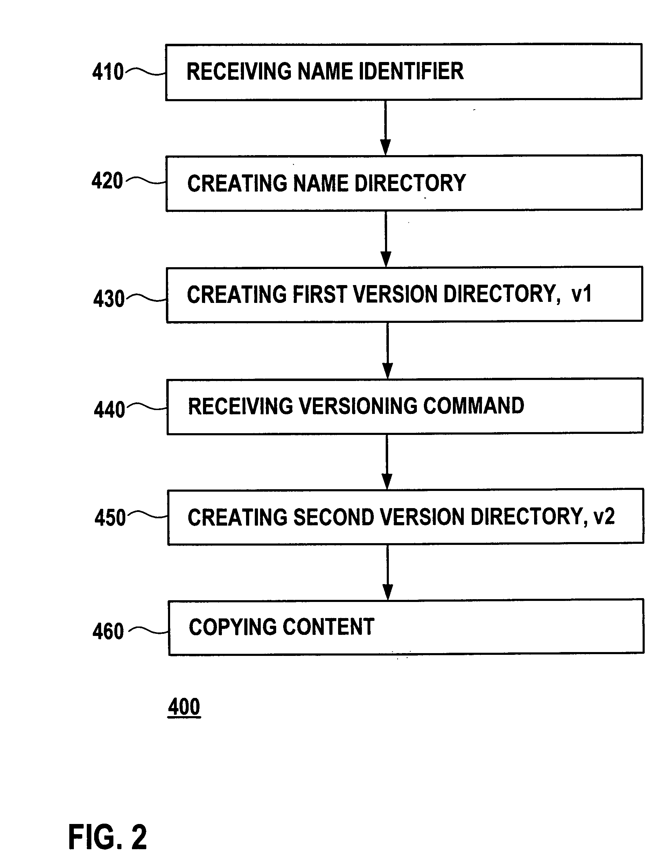

For describing details in connection with FIGS. 2-8, the specification uses the following conventions:

The term "computer object" refers to a technical representation of information that is stored on a computer medium (cf. memory 920) for subsequent presentation to a user. Preferably, the technical representation is a computer file, such as
- a text file (e.g., *.doc, *.txt), for example, to represent text or computer source code,
- a picture file (e.g., *.gif, *.jpg) to represent a picture,
- video file to a represent a picture sequence,
- an markup language file (HTML, XML) to represent an internet page,
- an audio file (e.g., *.mp3) to represent audio data,
- a combined multi-media file to represent a motion picture.
The abbreviations in parenthesis stand for exemplary file extensions (*.) or file formats. In the following, the term is shortened to "object". Optionally, the objects also interact with the user to convert information into technical programs (e.g., selection menus, keyboard driver, voice recorder, speech recognition).

The term "multi-file object" refers to a set of related files objects, such as a text file that belongs to a picture file. The files are related, for example, by a common name or a common name part, a file list or by being in the same subdirectory.

The phrase "manipulate an object" collectively refers to creating the object, modify the object or deleting the object.

The term "author" refers to a person who manipulates an object (i.e. creates, modifies or deletes it).

The "authoring tool" refers to a computer program to assist the author, such as a general purpose text processing program, a text editor, an HTML-editor, an XML-editor. Tools are commercially available. It is an advantage of the present invention, that modifications to the tool are not required.

The term "countable identifier" stands for any technical file identifier or directory identifier from that further identifiers can be derived by a counting rule. Preferably, counting follows rules familiar to the author (e.g., counting by incrementing numbers, or by moving through the alphabet). For example, identifiers are numerically counted as v1, v2, v3 or letter-counted as vA, vB, vC and so on. The "v" optionally stands for "version".

The term "counting up" refers to the action of providing a further countable identifier by counting to the next identifier, for example, counting up from "v1" to "v2".

The term "branching" refers to the action of providing a further identifier (countable or non-countable) by adding further characters to an existing identifier, for example branching from existing "v1" into "v1.a" and v1.b.

The term "object name" stands for any alphanumeric character string that the author assigns to the object, such as "alpha", "city", "mySAP", "tutorial object", "item1", "item2" and so on.

The term "location" stands for a logical address of a file, for example, the string "SHARED" refers to a root directory on a logical drive (indicated by ellipsis "..."). Physical access to the file is provided by the computer operation system.

The term "versioning" refers to storing a copy of an object at a different location and or under a different name.

In the figures, rectangle icons stand for directories; square icons stand for files.

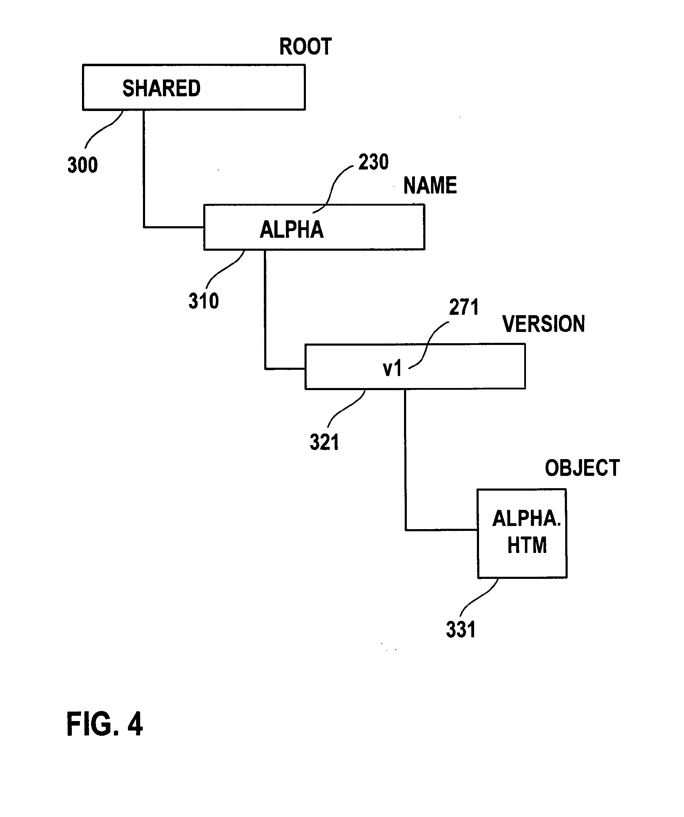

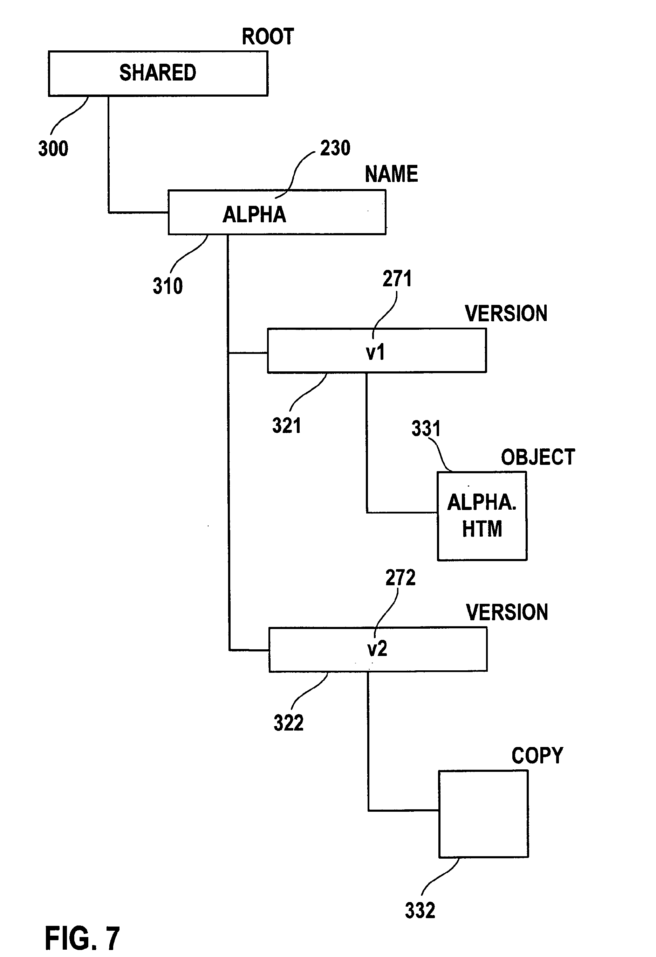

The present invention can be performed on a single computer; however, more advantageous is the implementation on multiple computers to support two or more authors. For convenience of explanation, the computers of system 999 of FIG. 1 have therefore the following exemplary configuration: Computer 900 stores the objects in a directory structure (cf. FIGS. 4,7); computer 901 interacts with a first author who uses a first authoring tool to manipulate the objects, computer 902 interacts with a second author who uses a second authoring tool to manipulate the objects. The versioning program - i.e. CPP 100 - is resident on computer 900 to be called at any time from either author. Calling CPP 100 on computer 900 from computer 901 or 902 is accomplished by those of skill in the art without the need of further explanation herein.

The authoring tools can be of the same kind, for example, both authors can use the same text-processing program. The distinctions into two authors is convenient; the invention is however also suitable for a single author as well.

The following scenario is conveniently assumed for explanation: The first author chooses the object name "alpha" and the object type "HTML-object"; the inventive versioning program creates a directory, a subdirectory and the HTML-object; the first author uses an HTML-editor to manipulate the object by adding two pictures "beta" in different versions (i.e. hyperlinks to picture files) and a text above the pictures. The second author uses the versioning program to manipulate a copy of the object, by selecting one of the pictures as the picture of choice.

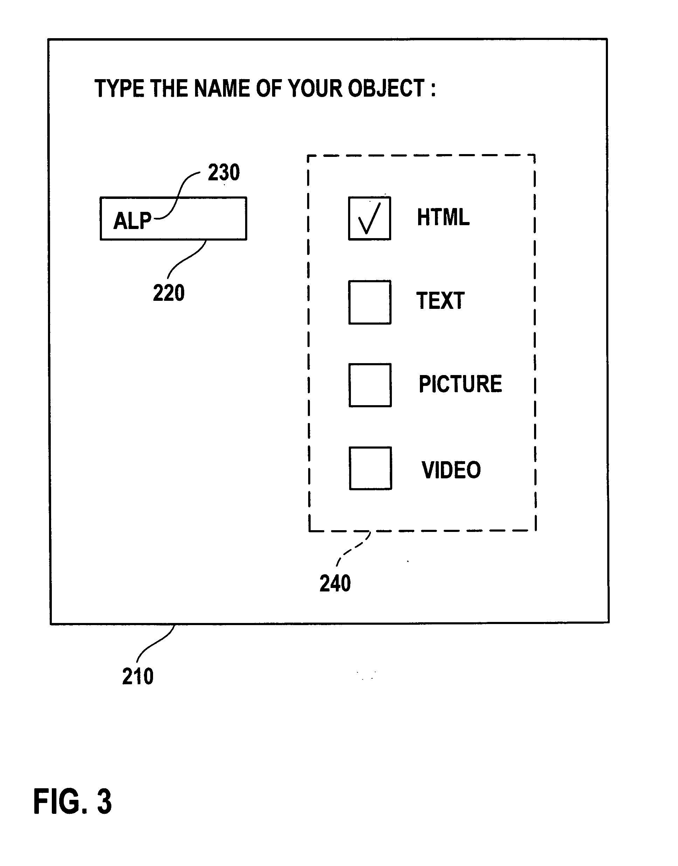

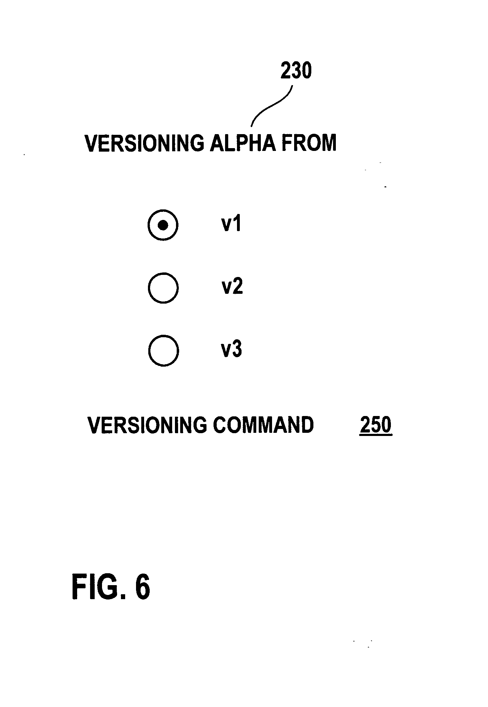

FIG. 2 illustrates a simplified flow chart of method 400 according to the present invention. Method 400 comprises:
- receiving 410 a name identifier (cf. 230 FIG. 3) for an object by interaction with an author (cf. FIG. 3);
- creating 420 a name directory (cf. 310 FIG. 4) with the name identifier;
- creating 430 a first version directory (cf. 321 FIG. 4) subordinated to the name directory, the version directory having a countable identifier (271);
- upon receiving 440 a versioning command (cf. 250 FIG. 6)
- creating 450 a second version directory (262) subordinated to the name directory (310), the second version directory (322) having a second countable identifier (272) derived from the first countable identifier (271);
- copying (460) the content of the first version directory (321) into the second version directory (262).
Preferably, steps 420, 430, 450 and 460 are performed without interaction with the author. Optionally, input masks are presented to the author (steps 410, 440, cf. FIGS. 3,6). Preferably, the name directory is created as a shared directory for multiple authors, for example in root directory "SHARED" (cf. FIG. 4).

Preferably, receiving 410 comprises to present a further input mask for selecting an object type (cf. 240 in FIG. 3), and creating 430 the version directory comprises to create an object (cf. file 331) of the selected object type (e.g. HTML).

FIG. 3 illustrates screen presentation 210 with input mask 220 to receive object name 230. The versioning program (i.e. CPP 100) performs receiving step 410. Presentation 210 invites the author to name the object (e.g., "TYPE THE NAME OF YOUR OBJECT:"). As illustrated, the author is just typing object name 230 "APLHA". As symbolized by a dashed frame, further input mask 240 is optionally presented to receive a selection for an object type, for example, from a check box list (e.g., HTML, TEXT, PICTURE, VIDEO). The author has selected HTML as the object type.

Having a check box list is convenient for creating multi-file objects with different object types; a selection field with radio buttons or any selector can be used as well.

FIG. 4 illustrates a directory hierarchy with root directory 300, name directory 310, and first version directory 321. Root directory 300 is existing initially, i.e. before executing method 400. Preferably, root directory 300 (labeled "SHARED") is shared between the authors.

The illustration of FIG. 4 is familiar to the person of skill in the art. The directory hierarchy can however be implemented differently; there is no need to show it to the author.

Name directory 310 has name 230 "alpha" as decided by the author (cf. FIG. 3). First version directory 321 (subordinated to directory 230) has countable identifier 271 (e.g., "v1" that is automatically provided.
First version directory 321 is the directory for that the author is invited to create object 331

As mentioned above, when the versioning program creates version directory 321 (step 430), it optionally creates object 331 of the selected object type (e.g. HTML-file). Conveniently, the file name is similar to object name 230 (e.g., "ALPHA.HTM"). Optionally, object 331 is a further directory for further files.

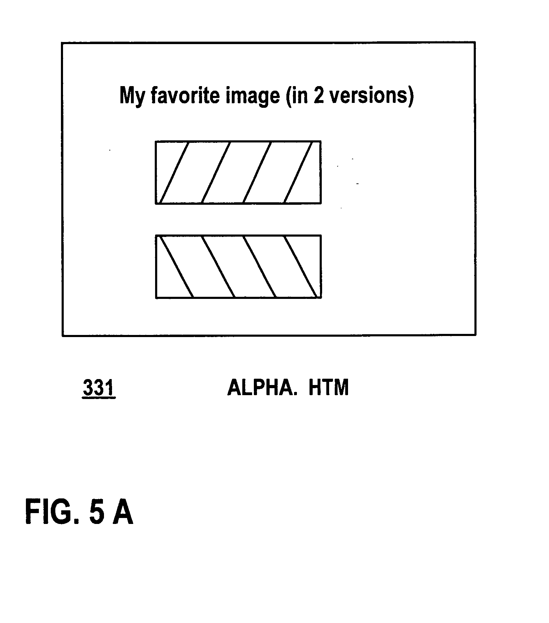

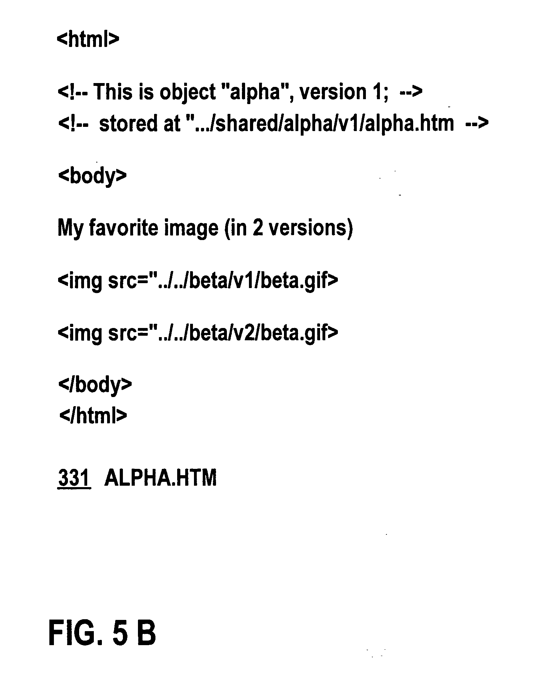

FIG. 5 illustrates object 331 in the first version (i.e. original version, location in FIG. 4: "SHARED/ALPHA/V1-/ALPHA.HTM"). FIG. 5A illustrates object 331 on a screen as presented to the user (after method 400 has been performed). FIG. 5B illustrates object 331 as a markup language file.

Object 331 is a multi-file object (e.g., file list citing "beta"). In the example, the picture exists in two versions on a further name directory ("beta") with versions subdirectories (v1, v2).

FIG. 6 illustrates a screen presentation with an input mask for receiving versioning command 250 from the author. Preferably, the screen indicates name 230 (e.g. "alpha") and the current versions that are already available for selection (automatically determined, radio buttons to select one).

In the exemplary scenario - case (1) - there is only version v1 (cf. directory 321) to start with. In further examples - case (2) - versions v1, v2 exist, the author selects v1; the versioning program (i.e. CPP 100) creates v1a and v1b by branching. Still further - case (3) - versions v1, v2 exist; the author selects v2, the versioning program creates v3 by up-counting.

FIG. 7 illustrates an updated directory hierarchy with root directory 300, name directory 310 (name 230 "alpha"), first version directory 321 (identifier 271 v1) with object 331 (as in FIG. 4) as well as second version directory 322 (identifier 272 v2) and object copy 332. Copy 332 corresponds to the content of directory 321 (i.e. ALPHA.HTM) that has been copied to directory 322 (step 460).

The author is now invited to modify object copy 332 at location "SHARED/ALPHA/v2/ALPHA.HTM". An example is explained in connection with the next figure.

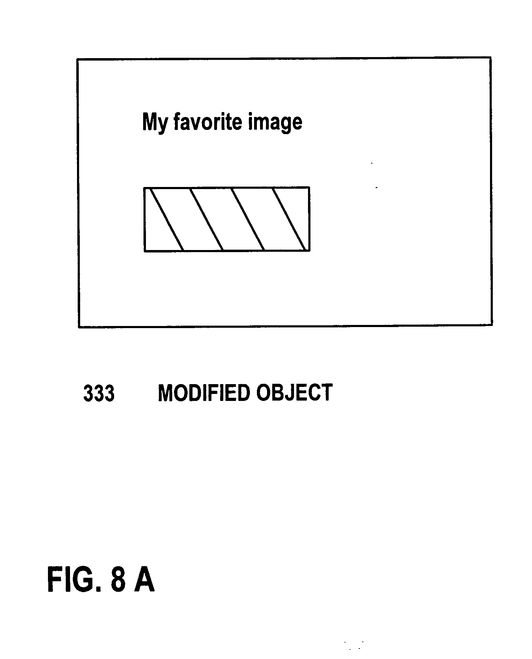

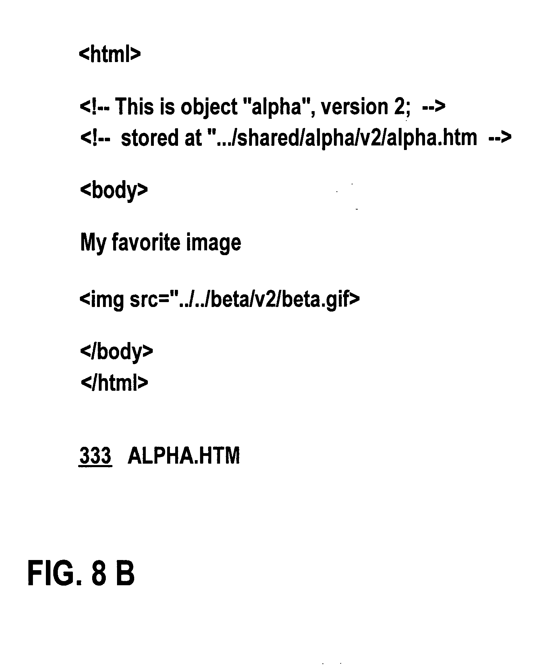

FIG. 8 illustrates exemplary object 333 of FIG. 5 in a second version (i.e. derived version), FIG. 8A on the screen as presented to the user, and FIG. 8B in a further markup language file. Object 333 is a modification to copy 332 (cf. FIG. 7) where the author has selected v2/beta.giv as the picture of choice and has slightly modified the text.

The invention can be summarized as an a article of manufacture comprising a computer usable medium 970 (cf. FIG. 1) having computer readable program code means 100 embodied therein for organizing computer objects in hierarchy. Computer readable program code means 100 in the article of manufacture cause computer 900 (e.g., in cooperation with computers 901/902) : to receive 410 name identifier 230 for an object 331 by interaction with an author; to create 420 a name directory 310 with name identifier 230; to create 430 first version directory 321 subordinated to name directory 310, first version directory 321 having first countable identifier 271; upon receiving 440 versioning command 250 to create 450 second version directory 322 subordinated to name directory 310, second version directory 322 having second countable identifier 272 derived from first countable identifier 271; and to copy 460 content 331/332 of first version directory 321 into second version directory 322.

The invention can also be summarized as computer system 999 (with at least one computer 900) for organizing objects 331, 332 in hierarchy with automatic versioning. The system comprises: means for receiving 410 name identifier 230 for object 331 by interaction with an author (cf. input mask 220); means for creating 420 name directory 310 with name identifier 230; means for creating 430 first version directory 321 subordinated to name directory 310, first version directory 321 having first countable identifier 271; means for receiving 440 versioning command 250 (cf. input mask in FIG. 6); means for creating 450 second version directory 322 subordinated to name directory 310, second version directory 322 having second countable identifier 272 derived from first countable identifier 271; and means for copying 460 content 331/332 of first version directory 321 into second version directory 322. The means are, for example, code means that cooperate with the operating system of the computer.

### Reference numbers

- 100: computer-program-product (CPP
- 210: screen presentation
- 220: input mask for object name
- 230: object name
- 240: input mask for object type
- 250: versioning command
- 271: first countable identifier
- 272: second countable identifier
- 300: root directory
- 310: name directory
- 321: first version directory
- 322: second version directory
- 331: object
- 332: object copy
- 333: modified object copy
- 400, 4xx: method, steps
- 9xx: computer, components

## Claims

1. Method (400) for organizing objects (331, 332) in hierarchy with automatic versioning,
the method (400) comprising the following steps:
receiving (410) a name identifier (230) for an object (331) by interaction with an author;
creating (420) a name directory (310) with the name identifier (230);
creating (430) a first version directory (321) subordinated to the name directory (310), the first version directory (321) having a first countable identifier (271);
upon receiving (440) a versioning command (250):
creating (450) a second version directory (322) subordinated to the name directory (310), the second version directory (322) having a second countable identifier (272) derived from the first countable identifier (271); and
copying (460) the content (331/332) of the first version directory (321) into the second version directory (322).

2. The method (400) of claim 1, wherein receiving (410) comprises to present an input mask (220) to the author.

3. The method (400) of claim 1, wherein receiving (410) comprises to present a further input mask (240) for selecting an object type, and wherein creating (430) the first version directory (321) comprises to create an object (331) of the selected object type.

4. The method (400) of claim 1, wherein the name directory (310) is created as a shared directory for multiple authors.

5. The method (400) of claim 1, wherein receiving the versioning command (250) comprises to determine the current version.

6. The method (400) of claim 1, wherein the second countable identifier (272) is derived from the first countable identifier (271) by up-counting.

7. Computer program product (100) for organizing objects in hierarchy with automatic versioning, the program product having a plurality of instructions that cause a computer processor to execute the method steps of any of claims 1-6.

8. An article of manufacture comprising a computer usable medium (970) having computer readable program code means (100) embodied therein for organizing computer objects in hierarchy, the computer readable program code means (100) in the article of manufacture for causing a computer (900):
to receive (410) a name identifier (230) for an object (331) by interaction with an author;
to create (420) a name directory (310) with the name identifier (230);
to create (430) a first version directory (321) subordinated to the name directory (310), the first version directory (321) having a first countable identifier (271);
upon receiving (440) a versioning command (250) to create (450) a second version directory (322) subordinated to the name directory (310), the second version directory (322) having a second countable identifier (272) derived from the first countable identifier (271); and to copy (460) the content (331/332) of the first version directory (321) into the second version directory (322).

9. Computer system (999) with at least one computer (900) for organizing objects (331, 332) in hierarchy with automatic versioning, the system comprising:
means for receiving (410) a name identifier (230) for an object (331) by interaction with an author;
means for creating (420) a name directory (310) with the name identifier (230);
means for creating (430) a first version directory (321) subordinated to the name directory (310), the first version directory (321) having a first countable identifier (271);
means for receiving (440) a versioning command (250);
means for creating (450) a second version directory (322) subordinated to the name directory (310), the second version directory (322) having a second countable identifier (272) derived from the first countable identifier (271); and
means for copying (460) the content (331/332) of the first version directory (321) into the second version directory (322).
